# EUROPÄISCHE PATENTSCHRIFT

(11) **EP 3 100 620 B1**
(45) Veröffentlichungstag und Bekanntmachung des Hinweises auf die Patenterteilung: **21.04.2021**
(21) Anmeldenummer: 16000986.6
(22) Anmeldetag: 02.05.2016
(51) Int. Cl.: A23P 30/40, B65B 3/04, A23G 9/20, A23G 3/02

(54) **VERFAHREN UND VORRICHTUNG ZUM PORTIONIERTEN ABFÜLLEN EINER LEBENSMITTELZUBEREITUNG**
METHOD AND DEVICE FOR THE PORTIONED DISPENSING OF A FOOD PREPARATION
PROCÉDÉ ET DISPOSITIF DE REMPLISSAGE PORTIONNÉ D'UNE PRÉPARATION ALIMENTAIRE

(30) Priorität: 01.06.2015 DE 102015006969
(43) Veröffentlichungstag der Anmeldung: 07.12.2016
(73) Patentinhaber: Molkerei Alois Müller GmbH & Co. KG, 86850 Aretsried (DE)
(72) Erfinder: WINTERWERBER, Harald, 84048 Mainburg (DE); HACKL, Christian, 86356 Neusäß (DE); SIGGELKOW, Stefan, 04910 Elsterwerda (DE)
(74) Vertreter: Seranski, Klaus

(56) Entgegenhaltungen:
- WO-A1-2009/110794
- DE-A1- 3 902 017
- DE-A1-102010 023 963
- DE-T2- 69 108 051
- US-A- 3 503 757
- US-A- 3 989 853
- US-A1- 2005 106 301

## Beschreibung

Die Erfindung betrifft ein Verfahren zum portionierten Abfüllen einer Lebensmittelzubereitung, nach dem Oberbegriff des Patentanspruchs 1 und eine zur Ausführung derartiger Verfahren betreibbare Abfüllvorrichtung..

Derartige Verfahren kommen beispielsweise beim Abfüllen von Lebensmittelzubereitungen auf Grundlage von Milchprodukten zum Einsatz. Dabei kann das erste aufzuschäumende Lebensmittel Sahne sein, welche in aufgeschäumtem bzw. aufgeschlagenem Zustand auf ein bereits in dem Behälter aufgenommenes zweites Lebensmittel aufgetragen wird. Die fertig abgefüllte Lebensmittelzubereitung wird dann für Transport und Lagerung luftdicht verschlossen. Dazu kann beispielsweise eine Siegelfolie auf einen Siegelrand des Behälters aufgesiegelt werden.

Verfahren der oben beschriebenen Art sind beispielsweise in der EP 0 853 888 A1 angegeben. Bei diesen bekannten Verfahren wird die Sahne mit Hilfe einer einen rotierenden Aufschlagkörper aufweisenden Aufschlageinrichtung in einem kontinuierlichen Vorgang aufgeschlagen bzw. aufgeschäumt, mit einem zweiten Lebensmittel zusammengeführt, vermischt und abgefüllt. In der DE 3418338 A1 ist ein Verfahren zur kontinuierlichen Herstellung von Lebensmittelschäumen aus fließ- und pumpfähigen Medien unter Verwendung eines Engspalthomogenisators beschrieben. Bei dem in dieser Schrift angegebenen Verfahren wird das aufgeschäumte Lebensmittel in einem kontinuierlichen Vorgang über ein Dispergierrohr einer weiteren Verarbeitungsmaschine zugeführt.

In der DE 7527199 ist ein Gerät zur Einzelzubereitung von Schlagsahneportionen angegeben, mit dem eine genaue Dosierung unterschiedlicher Schlagsahneportionen möglich ist. Bei mit den bekannten Verfahren abgefüllten Lebensmittelzubereitungen wird in einigen Fällen schon nach geringen Lager- bzw. Standzeiten eine Veränderung des aufgeschäumten ersten Lebensmittels beobachtet.

In der US 3,989,853 A und der DE 10 2010 023 963 A1 sind weitere Verfahren zum Aufschäumen von Lebensmitteln angegeben.

Angesichts dieser Probleme liegt der Erfindung die Aufgabe zugrunde, Verfahren und Vorrichtungen zum portionierten Abfüllen einer Lebensmittelzubereitung mit einem aufgeschäumten Lebensmittel zur Verfügung zu stellen, mit denen Lager- und Standzeiten ohne unerwünschte Änderungen der Lebensmittelzubereitung erhöht werden können.

Erfindungsgemäß wird diese Aufgabe durch die im kennzeichnenden Teil der Patentansprüche 1 und 10 angegebenen Weiterbildungen der bekannten Verfahren und Vorrichtungen gelöst.

Zum Aufschäumen eines flüssigen oder pastösen Lebensmittels, insbesondere fetthaltigen Lebensmittels, wird die Flüssigkeit oder Paste zunächst mit einem Aufschäumgas versetzt, das in Form von Luft, Stickstoff oder einem anderen Inertgas vorliegen kann. Dabei bilden sich in dem flüssigen oder pastösen Lebensmittel Gasblasen, die einen Durchmesser von mehreren Millimeter aufweisen können. Die Begrenzungsflächen der Gasblasen werden beim Aufschäumen fetthaltiger Lebensmittel durch Fettpartikel belegt, welche eine Teilchengröße von wenigen Mikrometern aufweisen können. Durch einen mechanisch bewirkten Schervorgang können die Gasblasen verkleinert werden, wobei durch Umorganisation der Fettpartikel weiterhin eine geschlossene Membran für die einzelnen Gasblasen sichergestellt werden kann. Wenn der Schervorgang fortgesetzt wird, kommt es zur Agglomeration der Fettpartikel, welche die Konsistenz des Schaums beeinträchtigt und zu einer unerwünschten Koagulation der Fettpartikel führt.

Bei einem erfindungsgemäßen Verfahren wird das mit dem Gas versetzte flüssige oder pastöse Lebensmittel mit Druck durch eine statische Schereinrichtung, wie etwa einen Engspalthomogenisator, gefördert. Dabei kann der Engspalthomogenisator ein Rohr mit einem darin aufgenommenen Kolben oder Einsatz aufweisen, wobei zwischen Rohr und Kolben ein Labyrinthspalt vorgegebener Breite mit vorgegebenem Verlauf gebildet ist, durch den das mit dem Gas versetzte flüssige oder pastöse Lebensmittel von einer Einlassöffnung in Richtung auf eine Entnahmeöffnung gefördert und dabei einer Scherbeanspruchung in dem engen Spalt unterzogen wird.

Mit dem erfindungsgemäßen Verfahren können Schäume gewünschter Konsistenz hergestellt werden, bei Einsatz einer statischen Schereinrichtung der Förderdruck, die Spaltbreite und der Spaltverlauf entsprechend eingestellt werden. Bei einer statischen Aufschlageinrichtung kann bei der Einstellung des Förderdrucks zudem eine Einstellung der mittleren Größe der in dem Lebensmittel gebildeten Blasen erfolgen.

Mit den herkömmlichen Verfahren, wie sie in der EP 0 853 888 A1 und DE 3418338 A1 beschrieben sind, wird das aufgeschäumte Lebensmittel nach dem Schäumungsvorgang kontinuierlich durch geeignete Förderleitungen, Puffergefäße und dergleichen geführt und erst danach abgefüllt. Die weitere Verarbeitung des bereits aufgeschäumten Lebensmittels vor der Abfüllung bewirkt weitere Scherprozesse in dem aufgeschäumten Lebensmittel, durch die die Konsistenz des Schaums durch Beeinflussung der Blasengröße und ggf. Partikelagglomeration verändert wird. Eine zusätzliche Beeinflussung kann bei bekannten Verfahren erfolgen, wenn der Schaum vor der Weiterverarbeitung in einem zentralen Gefäß gelagert und erst daraus einer weiteren Verarbeitung zugeführt wird. Ferner wird die Schaumkonsistenz in vielen Fällen auch dadurch nachteilhaft beeinflusst, dass in dem vorgehaltenen Schaum bereits eine Stabilisierungsreaktion erfolgt. Das so bereits stabilisierte Gefüge kann bei nachfolgenden Prozessen, wie etwa einem Transport, durch einwirkende Scherkräfte auf den bereits erzeugten Schaum Änderungen erfahren, welche sich ebenfalls in einer schwankenden Produktqualität bemerkbar machen können. Ferner kann es zu unterschiedlichen Verfallzeiten des Schaums in einem zentralen Gefäß oder dem Zuführsystem kommen, was zu einer partiellen Überalterung und entsprechenden negativen Auswirkungen auf den Schaum führen kann. Der bereits gebildete Schaum kann im Verlauf der weiteren Verarbeitung auch unterschiedlichen Temperatureinflüssen ausgesetzt sein, was ebenfalls zu Schwankungen in der Produktqualität führen kann.

Wenn jede Portion des ersten Lebensmittels einzeln dem Schäumungsvorgang unterzogen wird, ist es nicht mehr erforderlich, den Schaum in einem zentralen Gefäß oder in einem zentralen Zuführsystem vorzuhalten. Der Schaum kann räumlich und zeitlich unmittelbar vor dem Abfüllaggregat bzw. einer entsprechenden Dosierdüse hergestellt und abgefüllt werden, wodurch die oben angesprochenen Probleme gelöst werden. Bei erfindungsgemäßen Verfahren kann der Aufschäumvorgang auch in dem Abfüllaggregat selbst während des Abfüllvorgangs hergestellt werden, bzw. aus einer Entnahmeöffnung der Aufschäumeinrichtung unter Vermeidung einer Zwischenlagerung oder Förderung über Strecken von mehr als 50 cm, insbesondere 40 cm oder weniger, in den Behälter gefüllt werden.

Wie vorstehend bereits angesprochen, kann die Lebensmittelzubereitung bei der Ausführung erfindungsgemäßer Verfahren ein zweites Lebensmittel aufweisen, das gleichzeitig und/oder getrennt von dem ersten Lebensmittel in den Behälter gefüllt wird. Besonders bevorzugt ist die Ausführung solcher Verfahren, bei denen das zweite Lebensmittel in pastöser Form in den Behälter abgefüllt und danach das aufgeschäumte erste Lebensmittel auf das zweite Lebensmittel aufgesetzt wird.

Bei der Ausführung erfindungsgemäßer Verfahren wird das erste Lebensmittel im Verlauf des Schäumungsvorgangs mit einem Belüftungsgas versetzt und einem Schervorgang unterzogen werden. Durch den Schervorgang erfolgt eine Durchmischung des ersten Lebensmittels mit dem Belüftungsgas und, wie vorstehend erläutert, die Schaumbildung. Im Rahmen der Erfindung hat es sich dabei als besonders zweckmäßig erwiesen, wenn das mit dem Belüftungsgas versetzte erste Lebensmittel unter Druckeinwirkung, beispielsweise mit Hilfe eines Dosierkolbens und/oder einer Pumpe, durch eine statische Schereinrichtung gefördert und aus einer Entnahmeöffnung der Schereinrichtung unter Vermeidung einer Förderung durch Leitungen mit einer Länge von mehr als 50 cm im Anschluss an die Schereinrichtung unmittelbar in den Behälter gefüllt wird. Vorzugsweise beträgt die Länge der Leitungen im Anschluss an die Schereinrichtungen bis zum Abfüllort weniger als 40 cm, insbesondere weniger als 30 cm, besonders bevorzugt weniger als 20 cm. Die statische Schereinrichtung kann beispielsweise in Form eines Engspalthomogenisators verwirklicht werden. Dabei kann in dem Engspalthomogenisator ein Druck von 3 bis 10 bar, insbesondere etwa 4 bis 5 bar, erzeugt werden. In diesem Zusammenhang ist darauf hinzuweisen, dass entsprechende Engspalthomogenisatoren schon seit langem bekannt sind, beispielsweise aus der GB 487,584. Überraschenderweise hat es sich gezeigt, dass solche Engspalthomogenisatoren auch für die industrielle Massenproduktion von Lebensmittelzubereitungen und die entsprechende Abfüllung ohne Qualitätseinbußen eingesetzt werden können und nicht nur im Rahmen einer Einzelportionierung, wie im Rahmen der DE 7527199 U vorgeschlagen. Zur Ausführung erfindungsgemäßer Verfahren, insbesondere im Rahmen einer Großserienfertigung, hat es sich als zweckmäßig erwiesen, wenn der Engspalthomogenisator für Industriezwecke CIP- und SIP-fähig ausgelegt ist. Dabei bedeutet CIP "cleaning in place", d. h. die Aggregate, wie Rohrleitungen, Pumpen usw. werden im zusammengebauten Zustand gereinigt, SIP bedeutet "sterilization in place", d. h. die Aggregate, wie Rohrleitungen, Pumpen usw. werden im zusammengebauten Zustand sterilisiert. Sie können unter Vermeidung von Ecken, Kanten, Hinterschneidungen und dgl. aus einem sterilisierbaren, insbesondere auch durch Wärmeeinwirkung sterilisierbaren Material wie etwa Edelstahl hergestellt sein.

Im Verlauf erfindungsgemäßer Verfahren werden die Behälter vorzugsweise längs einer vorgegebenen und unterhalb einer Entnahmeöffnung der statischen Schereinrichtung verlaufenden Förderstrecke gefördert. So wird es möglich, stationäre Schereinrichtungen bzw. Aufschäumanordnungen zu benutzen. Die Förderung der Behälter kann dann derart intermittierend erfolgen, dass der Behälter unter der Entnahmeöffnung angehalten wird, bis der Abfüllvorgang zumindest bezüglich des ersten Lebensmittels abgeschlossen ist. Vor Abfüllen des aufgeschäumten ersten Lebensmittels kann bereits ein zweites Lebensmittel in den Behälter abgefüllt werden. Denkbar sind auch solche Verfahren, bei denen das zweite Lebensmittel gleichzeitig mit dem ersten aufgeschäumten Lebensmittel oder erst danach abgefüllt wird.

Im Rahmen erfindungsgemäßer Verfahren kann das erste Lebensmittel im Verlauf des Schäumungsvorgangs mit einem Belüftungsgas versetzt und einem Schervorgang unterzogen werden. Im Verlauf des Schervorgangs wird das Belüftungsgas gleichmäßig in dem flüssigen oder pastösen Lebensmittel verteilt und so eine Aufschäumung bewirkt.

Wie vorstehend erläutert kann die Verteilung der Blasengröße des Belüftungsgases in dem ersten Lebensmittel bei Einsatz statischer Schereinrichtungen durch Einstellung des Drucks erfolgen, mit dem das Lebensmittels durch die statische Schereinrichtung gepresst wird. Bei höherem Druck können kleinere Blasen erzeugt werden, was anschließend eine genauere Dosierung bzw. Portionierung ermöglicht.

Im Verlauf des Auschäumvorgangs kann ein Aufschlagvolumen des ersten Lebensmittels bei Ausführung erfindungsgemäßer Verfahren im Bereich von 50 % bis 200 % erreicht werden. Dadurch wird das Volumen des ersten Lebensmittels auf 150 bis 300 % des Ursprungsvolumens vergrößert. Dazu kann vorgesehen sein, dass dem ersten Lebensmittel das Belüftungsgas über eine steuerbare Dosiereinrichtung zugeführt wird. Dann kann das Aufschäumvolumen mit entsprechender Ansteuerung der Dosiereinrichtung für das Belüftungsgas, wie etwa Luft oder Stickstoff, gesteuert werden.

In einer bevorzugten Ausführungsform der Erfindung ist der Schaum, wie etwa Sahne, mit Hilfe einer Abfülldüse ausformbar. Durch entsprechende Ansteuerung der Dosiereinrichtung kann die Portionierung des aufgeschäumten ersten Lebensmittels über die Abfülldüse erfolgen. Im Verlauf des erfindungsgemäßen Verfahrens wird das erste Lebensmittel also intermittierend mit einem Belüftungsgas versetzt, einem Schervorgang unterzogen und abgefüllt, wobei die Schaumerzeugung für jede einzelne Portion der Lebensmittelzubereitung einzeln unmittelbar zeitlich und räumlich vor dem Abfüllvorgang erfolgt, derart, dass der Schaum unmittelbar nach seiner Erzeugung aus einer Entnahmeöffnung der Schäumungseinrichtung in den Behälter gefüllt bzw. auf ein in dem Behälter aufgenommenes zweites Lebensmittel aufgesetzt wird.

Erfindungsgemäß wird das mit einem Belüftungsgas versetzte erste Lebensmittel zur Ausführung des Schäumungsvorgangs mit einer Kolben-Zylindereinheit durch die statische Schereinrichtung gepresst, wobei der Pressdruck mit der Kolben-Zylindereinheit wunschgemäß eingestellt werden kann.

Zur genauen Dosierung der einzelnen Portionen des geschäumten ersten Lebensmittels kann das erste Lebensmitte mit der als Dosierkolben ausgeführten Kolben-Zylindereinheit über ein Ansaugventil aus einem Vorratsbehälter angesaugt und nach Schließen des Ansaugventils über ein Auslassventil über die statische Schereinrichtung gepresst werden. Anstelle eines Vorratsbehälters kann das flüssige oder pastöse Lebensmittel auch über Zuführleitungen dem Ansaugventil zugeführt werden, über das es von der Kolben-Zylindereinheit angesaugt werden kann.

Eine zur Ausführung erfindungsgemäßer Verfahren einsetzbare Vorrichtung ist in Anspruch 10 definiert und ist im Wesentlichen dadurch gekennzeichnet, dass sie eine zum Fördern von Lebensmittelbehältern längs einer Förderstrecke ausgelegte Fördereinrichtung und eine zum Aufschäumen eines ersten Lebensmittels, wie etwa Sahne, ausgelegte Aufschäumvorrichtung aufweist, aus der das aufgeschäumte erste Lebensmittel über eine Entnahmeöffnung in die darunter längs der Förderstrecke geförderten Behälter einfüllbar ist, insbesondere portioniert einfüllbar ist. Im Rahmen der industriellen Massenproduktion von Lebensmittelzubereitungen hat es sich als besonders zweckmäßig erwiesen, wenn eine erfindungsgemäße Abfüllvorrichtung eine Mehrzahl von parallel betreibbaren Förderstrecken aufweist, längs derer Lebensmittel gefördert werden können, wobei jeder Förderstrecke jeweils mindestens eine Aufschäumeinrichtung zugeordnet ist. Dabei kommen erfindungsgemäß Aufschäumeinrichtungen in Form von statischen Schereinrichtungen zum Einsatz, weil diese mit geringem Platzbedarf oberhalb der einzelnen Förderstrecken angeordnet werden können.

Nachstehend wird die Erfindung unter Bezugnahme auf die Zeichnung, auf die im Hinblick auf alle erfindungsgemäßen und in der Beschreibung nicht näher herausgestellten Einzelheiten ausdrücklich verwiesen wird, erläutert. In der Zeichnung zeigt:
- Fig. 1: eine schematische Darstellung einer im Rahmen der Erfindung einsetzbaren ersten Ausführungsform einer Aufschäumeinrichtung, und
- Fig. 2: eine schematische Darstellung einer im Rahmen der Erfindung einsetzbaren zweiten Ausführungsform einer Aufschäumeinrichtung.

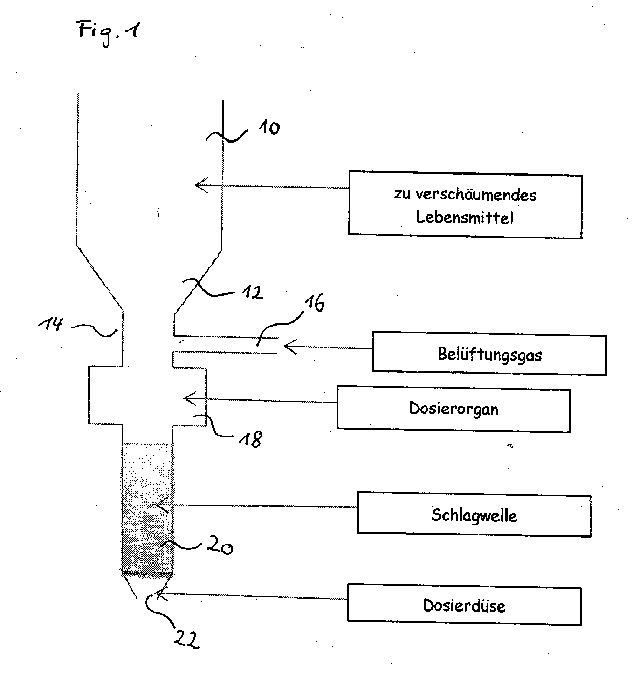

Die Aufschäumeinrichtung gemäß Fig. 1 ist oberhalb einer Förderstrecke angeordnet, längs der die zu befüllenden Lebensmittelbehälter gefördert werden. Sie weist einen Vorratsbehälter 10 für das aufzuschäumende erste Lebensmittel auf, aus dem dieses über einen sich in Schwererichtung trichterförmig verjüngenden Abgabebereich 12 zu einem Rohr 14 gelangt, in dem es über eine Zuleitung 16 mit einem Belüftungsgas versetzt wird. Der Zuleitung 16 kann ein steuerbares Ventil zugeordnet sein, mit dem die Zufuhr des Belüftungsgases gesteuert werden kann. Als Belüftungsgas wird zweckmäßigerweise ein inertes Gas wie etwa Stickstoff eingesetzt.

Das belüftete erste Lebensmittel wird über eine Dosiereinrichtung 18 dem Engspalthomogenisator 20 zugeführt, in dem eine Durchmischung des ersten Lebensmittels mit dem Belüftungsgas und dadurch eine Aufschäumung des ersten Lebensmittels erfolgt. Das aufgeschäumte erste Lebensmittel wird in eine Dosierdüse 22 abgegeben.

Die einzelnen Elemente der Aufschäumanordnung sind bei der in der Zeichnung dargestellten Ausführungsform untereinander angeordnet, lediglich die Zuführleitung kann in horizontaler Richtung verlaufen.

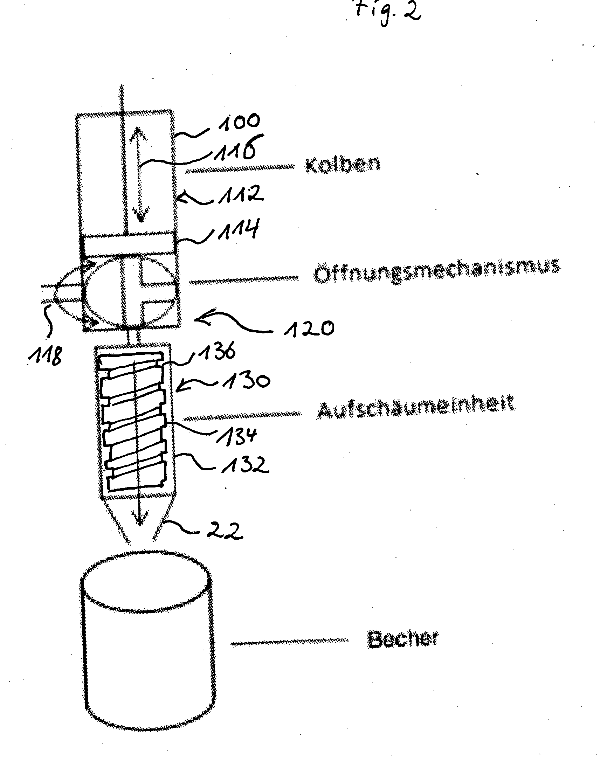

Bei der in Fig. 2 dargestellten Ausführungsform der Erfindung wird das aufzuschäumende Lebensmittel mit einer Kolben-Zylindereinrichtung 100 dosiert. Die Kolben-Zylindereinrichtung 100 weist einen Zylinder 112 mit einem hin- und hergehend darin bewegbaren Kolben 114 auf, wie durch den Doppelpfeil 116 angedeutet. Zum Ansaugen des ersten Lebensmittels wird nach drehen des Dreiwegeventils 120 aus der in Fig. 2 dargestellten Abgabestellung um 90° gegen den Uhrzeigersinn in eine Ansaugstellung der Kolben 114 von dem Dreiwegeventil wegbewegt, so dass das erste Lebensmittel über eine Ansaugleitung 118 in den Zylinder angesaugt werden kann. Der Hub des Kolbens 114 bestimmt das Volumen des angesaugten Lebensmittels.

Nach Drehen des Dreiwegeventils in die in Fig. 2 dargestellte Abgabestellung wird das in dem Zylinder aufgenommene Lebensmittel durch Verschieben des Kolbens in Richtung auf das Dreiwegeventil in Richtung auf die als Engspalthomogenisator ausgeführte Aufschäumeinheit 130 gepresst. In dem Engspalthomogenisator 130 durchläuft das bereits in der Ansaugleitung 118 mit Gas, wie etwa Stickstoff, versetzte erste Lebensmittel einen zwischen einem Zylinder 132 und einer äußeren Begrenzungsfläche eines in dem Zylinder aufgenommenen Einsatzes 134 gebildeten Labyrinthspalt 136. In dem Labyrinthspalt wird das mit dem Aufschäumgas versetzte erste Lebensmittel einer Scherbeanspruchung unterzogen, was, wie eingangs erläutert, zu einem Aufschäumen des Lebensmittels führt. Unmittelbar nach Verlassen des Zylinders 132 gelangt das jetzt aufgeschäumte Lebensmittel in die Dosierdüse 22, durch welche es in den darunter stehenden Behälter eingefüllt wird.

Zwischen Engspalthomogenisator 130 und Dosierdüse 22 sind keine weiteren Förderelemente vorgesehen, so dass es nicht zu einer weiteren Scherbeanspruchung des bereits aufgeschäumten Lebensmittels kommt. Durch Einstellung des Auspressdrucks aus der Kolben-Zylindereinrichtung 100 des Labyrinthspalts zwischen Einsatz 134 und Zylinder 132 und Temperatur des Lebensmittels kann eine gewünschte Schaumkonsistenz zuverlässig sichergestellt werden, so dass der Aufschäumvorgang für jede Portion des ersten Lebensmittels durch hin- und hergehende Bewegung des Zylinders 140 ausgeführt und der so hergestellte Schaum genau dosiert in den Behälter eingefüllt werden kann.

Bei der in Fig. 2 dargestellten Ausführungsform wird durch das Dreiwegeventil 120 ein das Ansaugen des Lebensmittels in den Zylinder 112 ermöglichendes Ansaugventil und durch entsprechende Verstellung ein das Auspressen des Lebensmittels aus dem Zylinder 112 erlaubendes Auslassventil bereitgestellt.

## Patentansprüche

1. Verfahren zum portionierten Abfüllen einer Lebensmittelzubereitung, bei dem ein erstes flüssiges oder pastöses Lebensmittel einem Schäumungsvorgang unterzogen, in einen Behälter gefüllt und der Behälter mit der darin aufgenommenen Lebensmittelzubereitung luftdicht verschlossen wird, **dadurch gekennzeichnet, dass** jede Portion des ersten Lebensmittels einzeln dem Schäumungsvorgang unterzogen wird, wobei das erste Lebensmittel mit einem Belüftungsgas versetzt, das mit einem Belüftungsgas versetzte erste Lebensmittel zur Ausführung des Schäumungsvorgangs mit einer Kolben-Zylindereinheit durch eine statische Schereinrichtung gepresst und aus einer Entnahmeöffnung der Schereinrichtung in den Behälter gefüllt wird.

2. Verfahren nach Anspruch 1, **dadurch gekennzeichnet, dass** die Lebensmittelzubereitung ein zweites Lebensmittel aufweist, das gleichzeitig mit und/oder getrennt von dem ersten Lebensmittel in den Behälter gefüllt wird.

3. Verfahren nach Anspruch 1 oder 2, **dadurch gekennzeichnet, dass** das mit dem Belüftungsgas versetzte erste Lebensmittel nach dem Schäumungsvorgang aus einer Entnahmeöffnung der Schereinrichtung in den Behälter gefüllt wird.

4. Verfahren nach Anspruch 3, **dadurch gekennzeichnet, dass** die Schereinrichtung einen Engspalthomogenisator aufweist.

5. Verfahren nach Anspruch 3 oder 4, **dadurch gekennzeichnet, dass** die Behälter längs einer vorgegebenen und unterhalb einer Entnahmeöffnung der statischen Schereinrichtung verlaufenden Förderstrecke gefördert werden.

6. Verfahren nach einem der vorhergehenden Ansprüche, **dadurch gekennzeichnet, dass** das Volumen des ersten Lebensmittels durch den Aufschäumvorgang auf 150 bis 300 % des Ursprungsvolumens vergrößert wird.

7. Verfahren nach einem der Ansprüche 1-6, **dadurch gekennzeichnet, dass** dem ersten Lebensmittel das Belüftungsgas über eine steuerbare Dosiereinrichtung zugeführt wird.

8. Verfahren nach Anspruch 7, **dadurch gekennzeichnet, dass** die Portionierung des aufgeschlagenen ersten Lebensmittels über eine entsprechende Ansteuerung der Dosiereinrichtung erfolgt.

9. Verfahren nach Anspruch 1, **dadurch gekennzeichnet, dass** das erste Lebensmittel mit der Kolben-Zylindereinheit über ein Ansaugventil angesaugt und nach Schließen des Ansaugventils über ein Auslassventil durch die statische Schereinrichtung gepresst wird.

10. Abfüllvorrichtung zum Ausführen eines Verfahrens nach einem der vorhergehenden Ansprüche mit einer zum Fördern von Lebensmittelbehältern längs einer Förderstrecke ausgelegten Fördereinrichtung und einem zum Aufschäumen eines ersten Lebensmittels aufgelegten Aufschäumeinrichtung, aus der das aufgeschäumte erste Lebensmittel über eine Entnahmeöffnung in die darunter längs der Förderstrecke geförderten Behälter portioniert einfüllbar ist, **dadurch gekennzeichnet, dass** die Aufschäumeinrichtung eine statische Schereinrichtung, insbesondere einen Engspalthomogenisator und eine Kolben-Zylinder-Einheit aufweist, mit der das mit einem Belüftungsgas versetzte erste Lebensmittel zur Ausführung des Schäumungsvorgangs durch die statische Schereinrichtung gepresst wird..

11. Abfüllvorrichtung nach Anspruch 10, mit einer Mehrzahl von parallel betreibbaren Förderstrecken, denen jeweils mindestens eine Aufschäumeinrichtung zugeordnet ist.

## Claims

1. A method for the portioned dispensing of a food preparation, wherein a first liquid or paste-like food undergoes a foaming process and is poured into a container and the container is sealed so that it is airtight with the food preparation stored therein, **characterised in that** each portion of the first food is subjected to the foaming process individually, wherein the first food is mixed with an aeration gas and the first food mixed with an aeration gas is squeezed by a piston/cylinder unit into a static shearing device in order for the foaming process to be performed and then dispensed from a dispensing opening in the shearing device into the container.

2. The method according to claim 1, **characterised in that** the food preparation has a second food which is added to the container concomitantly with and/or separately from the first food.

3. The method according to claim 1 or 2, **characterised in that**, following the foaming process, the first food mixed with the aeration gas is dispensed into the container from a dispensing opening in the shearing device.

4. The method according to claim 3, **characterised in that** the shearing device has a narrow-gap homogeniser.

5. The method according to claim 3 or 4, **characterised in that** the containers are conveyed along a predefined conveying path running underneath a dispensing opening of the static shearing device.

6. The method according to one of the preceding claims, **characterised in that** the volume of the first food is increased to 150% to 300% of the original volume as a result of the foaming process.

7. The method according to one of claims 1 to 6, **characterised in that** the aeration gas is added to the first food via a controllable dosing device.

8. The method according to claim 7, **characterised in that** the portioning of the whipped first food is effected by controlling the dosing device accordingly.

9. The method according to claim 1, **characterised in that** the first food is suctioned by the piston/cylinder unit via a suction valve and, once the suction valve is closed, the first food is squeezed into the static shearing device by means of a discharge valve.

10. A dispensing device for performing a method according to one of the preceding claims with a conveying device configured to convey food containers along a conveying path and a foaming device configured to foam a first food, from which foaming device the foamed first food can be poured in portions, through a dispensing opening, into the containers conveyed along the conveying path therebelow, **characterised in that** the foaming device has a static shearing device, in particular a narrow-gap homogeniser and a piston/cylinder unit which squeezes the first food mixed with an aeration gas into the static shearing device in order for the foaming process to be performed.

11. The dispensing device according to claim 10, with a plurality of conveying paths operable in parallel to each of which at least one foaming device is assigned.

## Revendications

1. Procédé de conditionnement portionné d'une préparation alimentaire, dans lequel un premier produit alimentaire liquide ou pâteux est soumis à un processus de moussage et est conditionné dans un conteneur et ledit conteneur renfermant ladite préparation alimentaire est scellé de façon étanche à l'air ; **caractérisé en ce que** chaque portion dudit premier produit alimentaire est soumise séparément audit processus de moussage, ledit premier produit alimentaire étant mélangé à un gaz aérateur, ledit premier produit alimentaire mélangé au gaz aérateur étant introduit à pression, à l'aide d'un ensemble piston-cylindre, dans une unité de cisaillement statique pour réaliser le processus de moussage puis étant conditionné dans ledit conteneur à la sortie de l'unité de cisaillement.

2. Procédé selon la revendication 1, **caractérisé en ce que** la préparation alimentaire comporte un deuxième produit alimentaire qui est conditionné dans ledit conteneur simultanément et/ou séparément du premier produit alimentaire.

3. Procédé selon la revendication 1 ou 2, **caractérisé en ce que** le premier produit alimentaire mélangé au gaz aérateur est conditionné dans ledit conteneur après le processus de moussage à la sortie de l'unité de cisaillement.

4. Procédé selon la revendication 3, **caractérisé en ce que** l'unité de cisaillement comporte un homogénéisateur à fente étroite.

5. Procédé selon la revendication 3 ou 4, **caractérisé en ce que** les conteneurs circulent le long d'une voie d'amenée prédéfinie sous la sortie de l'unité de cisaillement statique.

6. Procédé selon l'une des revendications précédentes, **caractérisé en ce que** le volume du premier produit alimentaire augmente au cours du processus de moussage, pour représenter de 150 à 300 % du volume d'origine.

7. Procédé selon l'une des revendications 1 à 6, **caractérisé en ce que** le gaz aérateur est apporté au premier produit alimentaire par le biais d'une unité doseuse commandable.

8. Procédé selon la revendication 7, **caractérisé en ce que** la division en portions du premier produit alimentaire fouetté se produit par le biais d'une commande adaptée de ladite unité doseuse.

9. Procédé selon la revendication 1, **caractérisé en ce que** le premier produit alimentaire est aspiré par l'ensemble piston-cylindre par le biais d'une vanne d'aspiration puis, après fermeture de ladite vanne d'aspiration, est introduit à pression dans l'unité de cisaillement statique par le biais d'une vanne de sortie.

10. Dispositif de conditionnement permettant de réaliser un procédé selon l'une des revendications précédentes, comportant une unité d'amenée conçue pour amener des conteneurs à produit alimentaire le long d'une voie d'amenée, ainsi qu'un dispositif de moussage conçu pour faire mousser un premier produit alimentaire à la sortie duquel le premier produit alimentaire moussé peut être conditionné dans ledit conteneur, de façon portionnée, dans les conteneurs circulant le long de ladite voie d'amenée sous ledit dispositif de moussage ; **caractérisé en ce que** le dispositif de moussage comporte une unité de cisaillement statique, notamment un homogénéisateur à fente étroite et un ensemble piston-cylindre à l'aide duquel le premier produit alimentaire mélangé à un gaz aérateur est introduit à pression dans l'unité de cisaillement statique pour réaliser le processus de moussage.

11. Dispositif de conditionnement selon la revendication 10, comprenant une pluralité de voies d'amenée exploitables en parallèle et auxquelles est associé au moins un dispositif de moussage respectif.
